# EUROPEAN PATENT APPLICATION

(11) **EP 3 944 176 A1**
(43) Date of publication of application: **26.01.2022**
(21) Application number: 20020334.7
(22) Date of filing: 22.07.2020
(51) Int. Cl.: G06Q 30/06, G06Q 50/12

(54) **INSTANT ORDERING SYSTEM**

(71) Applicant: JALVIS SRL, 73011 Alezio (LE) (IT)
(72) Inventor: Leopizzi, Giacomo, 73011 Alezio (IT); Martorelli, Simone, 85104 Bratislava (SK)
(74) Representative: Cornacchia, Pierluigi

(57) **Abstract**

The purpose of the present invention is to create an ordering system through the iOs / Android application designed to provide customers of companies preferably from the tourism / hotel and restaurant world but easily adaptable to any context in which the user should satisfy its immediate need and be easily localized and / or localizable, a tool for the creation and management of orders and their payment. With a focus on internationalization, this invention aims also to decrease customer waiting times, eliminate the language barrier, provide detailed information on the single product, optimize order management for the company and provide preferred means of payment.

## Description

The present invention relates to a system for generating and managing product orders and their payment preferably and not limited to tourist/hotel and restaurant facilities. More specifically, this is a system that allows customers to order on their own by accessing the digital menu available on their mobile device, and the company to automate the reception, order and payment processes with a focus on international customers.

This system can be adapted to any context that provides for the use of a service and at the same time the need for interaction to satisfy a need such as and not limited to viewing a movie/comedy/show/concert inside a cinema/theater, a sporting event in a stadium, a conference in a university classroom, etc ...

While the "food delivery" field is constantly expanding due to the introduction of technologies that allows a person to order directly from home, the ordering process within restaurants or hotel structures has remained almost unchanged.

The tourist facilities currently work to take orders from waiting customers and then deliver the food ordered to the table or room. Customer waiting times will vary depending on the load of requests and will depend considerably on the time required for a service employee, who already looks after several tables, to identify the new customers and makes himself available to take the order.

Often in places with a high tourist flow, knowledge of languages becomes a particularly strategic factor, capable of differentiating a successful company from a failing one. To date, there are still enormous difficulties in the interaction between people who speaks different languages, with consequences on the attractiveness of international customers, discouraged by the absence of menu available in their native language.

The customer who is about to order something by choosing foods from a paper menu, will hardly be able to learn detailed product information, such as preparation methods, allergens, ingredients, supply chain, nutritional properties.

Still, there is little awareness of the customer's health problems, who are promptly forced to contact the service employee to reassure him about the absence of a specific allergen, who in turn is often unable to provide this guarantee and will be required to contact the kitchen for confirmation in this regard. If the customer doesn't know the local language, getting such reassurance becomes even more difficult.

Tourist facilities often do not provide customers with a wide range of alternative payment instruments to paper money. This creates many difficulties for customers, each of whom used to take advantage of a specific electronic payment system.

The company that intends to implement technologies that allow a more organic and faster order management is often forced to face the onerous cost of the installation as well as the maintenance of the related equipment currently on the market and therefore is discouraged in introducing those tools and methodologies that would simplify the business life of the company.

The solutions currently available on the market, even if they involve the use of technological equipment, represent a particularly heavy investment by the company, as they provide for the purchase of devices which, positioned on the tables, allow the customer to order in autonomy.

In other cases, these are tailored applications specifically designed for the individual company and supplied by contract subscription, without internationalization features, attention to health issues, payment management and electronic invoicing.

The purpose of the present invention is to create an ordering system through the iOs / Android application designed to provide customers of companies preferably from the tourism / hotel and restaurant world but easily adaptable to any context in which the user should satisfy its immediate need and be easily localized and / or localizable, a tool for the creation and management of orders and their payment.

With a focus on internationalization, this invention aims to decrease customer waiting times, eliminate the language barrier, provide detailed information on the single product, optimize order management for the company, provide preferred means of payment.

Further characteristics and advantages of the object of the present invention will be better illustrated by analyzing the figures which illustrate a preferred but not exclusive embodiment of the invention.

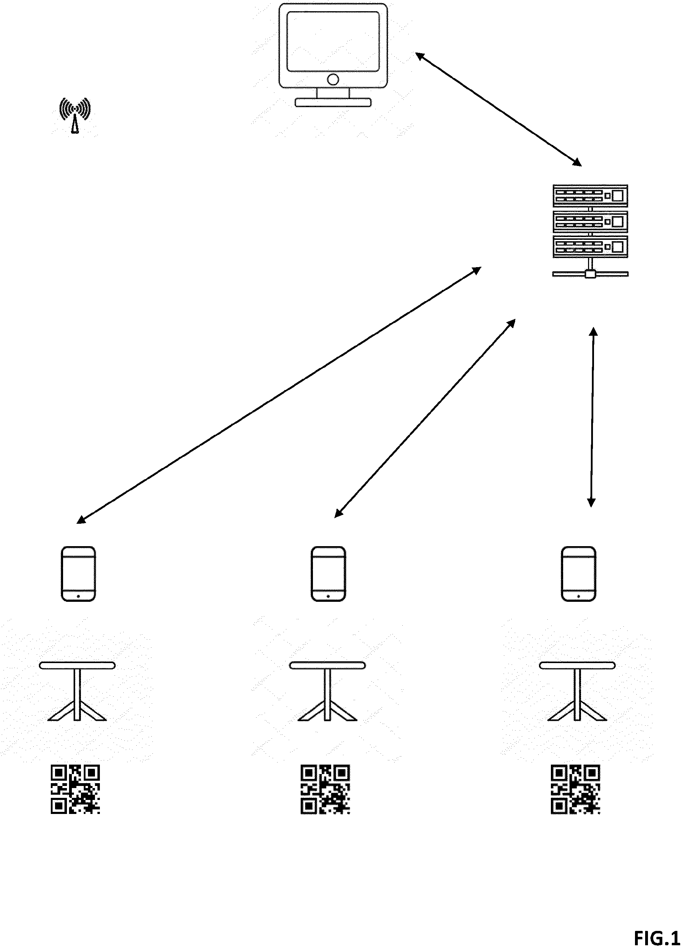

Figure 1 shows an ordering system according to a possible embodiment. The ordering system uses a server, a database to provide menu info and receive orders from smartphones through the internet as well as one or more workstations for the management of orders by the company as well as Beacons, NFC or QR codes for the location of customers.

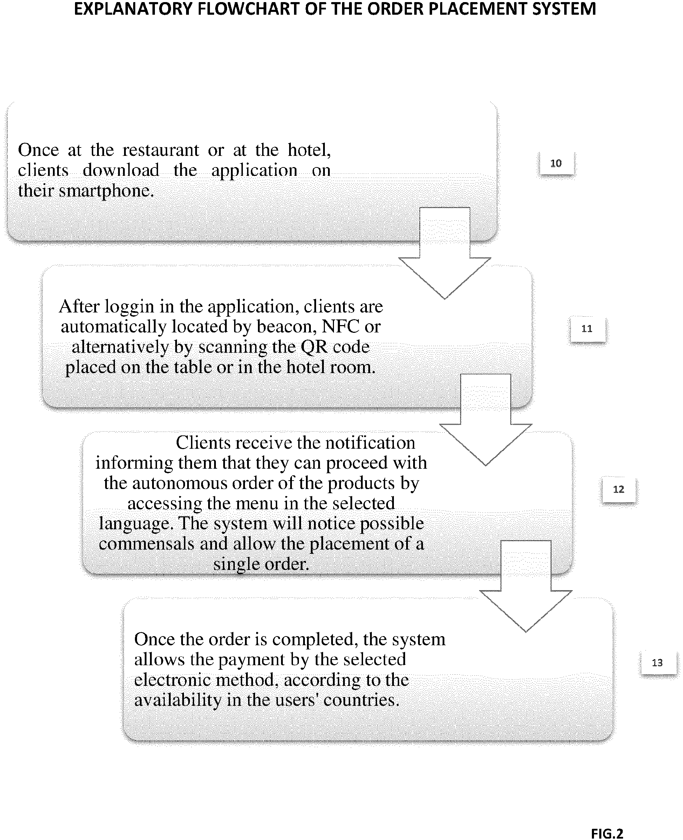

Figure 2 is an illustrative flowchart of the ordering system in one possible embodiment. When a customer enters a restaurant and is seated at a table, the ordering process can begin. The same situation would occur once checking into a hotel or seating inside a stadium, theater, cinema, train, etc ... Immediately informed of the possibility of being served in this way, directly through the application, the customer connects to the Wi-Fi provided by the structure or accesses his data connection and downloads the app from the store of his smartphone (if not already present in his device). (phase 10). Thanks to NFC technology or through beacons, devices that use BLE-Bluetooth Low Energy technology, strategically positioned inside the restaurant, the customer is automatically located inside the structure. Alternatively, the customer will find a QR Code on his table, the scan of which will allow him to be immediately located inside the restaurant and at the specific table (phase 11). At this point, the smartphone or other device communicates and transmits the location and information relating to the table to the server (figure 1).

Once the exact position of the customer has been detected, the server notifies it of the possibility of being able to proceed with the order, by accessing the menu in the chosen language (phase 12). The company will be able to choose whether to enter the menu in a specific language in guided mode or, once it has been entered in the mother tongue, to let everything automatically translate from the application.

The presence of any diners in the same order session will be recognized by the application, as they are located by the same QR Code or Beacon or NFC and will therefore allow the creation of a single order for the table.

At this point, the customer can view the products he intends to order from the menu now available on his mobile device.

By selecting the single product proposed, you will be able to take note of information relating to ingredients, methods of preparation, any allergens and certifications. The search can also be performed on the basis of "filters" chosen by the user: for example, he can set a specific allergen as a filter and the application will only display dishes that do not contain it.

Once the order has been created, the customer can proceed to pay for the same, choosing from the various electronic payment methods available. This also makes the payment system more immediate in the case of groups of people considered that each individual order is processed individually, avoiding customers having to identify their consumption in the traditional receipt and divide the amounts (phase 13).

The payment received by the customer will be immediately viewable by the company and managed through an affiliated financial intermediary.

In the case of business lunches or dinners, transfer to the company account may be required. The application will automatically send the electronic invoice to the customer.

The order thus created will be transmitted to the server and the latter will transmit it to the work station present at a point chosen by the company (figure 1).

The application will manage all incoming orders and filter them by type or products in the event that there are multiple workstations for the preparation of the order. In this specific hypothesis, each work station will only receive the order that must be put in place from the specific location in which it is located.

## Claims

1. Instantaneous ordering system for the speeding up, issuing and management of orders, preferably but not limited to holiday facilities and restaurants, which includes:
- a device positioned in the company and programmed to receive orders;
- a server that manages the flow of data coming from and towards customers' device and the company;
- a customer localization mechanism which allows access to the electronic menu;
- a mechanism that allows to proceed with the payment through the favourite method.

2. Ordering system according to claim 1, **characterized by** a method that allows access to an electronic menu by any mobile device that is preferably identified but not limitedly within holiday facilities and restaurants;

3. Ordering system according to the previous claim, where the geolocalization of the mobile device occurs through the scanning of a QR code or alternatively through Beacon devices or NFC technology;

4. Ordering system according to claim n. 2, where the customer, once accessing to the menu, receives it in the own mobile language configuration helping in overcoming the language barriers between customer and structure;

5. Ordering system according to the previous claims where the customer independently chooses to end the transaction and issue the invoice and pay it.
